# EUROPEAN PATENT APPLICATION

(11) **EP 1 847 974 A1**
(43) Date of publication of application: **24.10.2007**
(21) Application number: 06713399.1
(22) Date of filing: 09.02.2006
(51) Int. Cl.: G08C 13/00

(54) **INFORMATION PROCESSING DEVICE, READ TERMINAL, NON-PUBLIC INFORMATION READ SYSTEM, NON-PUBLIC INFORMATION READ METHOD, INFORMATION PROCESSING PROGRAM, AND NON-PUBLIC INFORMATION READ PROGRAM**

(30) Priority: 10.02.2005 JP 2005035147
(71) Applicant: NTT DoCoMo INC., Chiyoda-ku Tokyo 100-6150 (JP)
(72) Inventor: WADA, Teruyuki I.P. Dep., NTT DoCoMo, Inc.,, Tokyo, 100-615 (JP); YANAGAWA, Kazuhiko I.P. Dep., NTT DoCoMo, Inc.,, Tokyo, 100-615 (JP); OZAWA, Takeharu DoCoMo Systems, Inc.,, Tokyo 107-0052 (JP); KATO, Daisuke DoCoMo Systems, Inc.,, Tokyo 107-0052 (JP)
(74) Representative: GROSSE BOCKHORNI SCHUMACHER
(86) International application number: PCT/JP2006/302256
(87) International publication number: WO 2006/085584

(57) **Abstract**

In a personal information access system 1, a bar-code information output 106 of an information processing device 10 makes bar-code information by associating personal information with term information defining a valid period of the personal information, a password, and terminal-identification information unique to an access terminal 20 permitted to gain access, and the bar-code information is printed on a paper medium M. The access terminal 20 displays only the personal information permitted to output by an output controller 204, on a display part 205. When the personal information is bar-coded with the valid period being set, in addition to encryption, the security level of personal information is synergistically enhanced and it is feasible to ensure prevention of leakage of personal information to third parties.

## Description

### Technical Field

The present invention relates to an information processing device, access terminal, private information access system, private information access method, information processing program, and private information access program.

### Background Art

The technology in the field of this kind is, for example, a document information processing system described in Patent Document 1. This conventional system is arranged to preliminarily encrypt information that should be prevented from leaking to third parties, such as information concerning the privacy of individuals, i.e., private information by an encryption key, to print it as a bar code on a predetermined medium (paper medium or the like), and to permit only a predetermined access terminal with a corresponding decryption key to gain access to the private information.
Patent Document 1: Japanese Patent Application Laid-Open No. 2003-256762

### Disclosure of the Invention

### Problem to be Solved by the Invention

In the system as described above, however, the printing on the predetermined medium enhances handleability of the private information, while a risk of leakage of the private information to third parties becomes higher in the event that the medium or the access terminal is stolen or lost. For this reason, there are desires for a technology of ensuring higher security and thus ensuring prevention of leakage of private information to third parties.

The present invention has been accomplished in order to solve the above problem and an object of the invention is to provide an information processing device, access terminal, private information access system, private information access method, information processing program, and private information access program capable of ensuring prevention of leakage of private information to third parties.

### Means for Solving the Problem

In order to solve the above problem, an information processing device according to the present invention is an information processing device for outputting encrypted information resulting from encryption of predetermined plaintext information, as bar-code information to a predetermined medium, the information processing device comprising: encrypting means for encrypting the plaintext information to obtain the encrypted information; and bar-code information outputting means for generating bar-code information containing the encrypted information and condition information which defines a condition for decryption of the encrypted information to acquire the plaintext information, and for outputting the bar-code information to the predetermined medium.

In this information processing device, the bar-code information outputting means generates the bar-code information containing the encrypted information resulting from encryption of the plaintext information, and the condition information defining the condition for acquisition of the plaintext information, and the bar-code information is outputted to the predetermined medium. As the plaintext information is bar-coded with the acquisition condition being set, in addition to the encryption as described above, the security level of the plaintext information is synergistically enhanced and it is thus feasible to ensure prevention of leakage of the plaintext information to third parties even in the event that the medium or the access terminal is stolen or lost.

Another information processing device according to the present invention is an information processing device for outputting private information to a predetermined medium, the information processing device comprising: encrypting means for encrypting the private information; and bar-code information outputting means for generating bar-code information in which the encrypted private information is associated with term information defining a valid period of the private information, and for outputting the bar-code information to the predetermined medium.

In this information processing device, the bar-code information outputting means generates the bar-code information of the encrypted private information in association with the term information defining the valid period of the private information, and outputs the bar-code information to the predetermined medium. As the private information is bar-coded with the valid period being set, in addition to the encryption in this manner, the security level of the private information is synergistically enhanced, and it is thus feasible to ensure prevention of leakage of the private information to third parties even in the event that the medium or the access terminal is stolen or lost.

The condition information preferably contains information about a term. In this case, the plaintext information is bar-coded with the term being set, in addition to the encryption, whereby the security level of the plaintext information is synergistically enhanced, and it is thus feasible to ensure prevention of leakage of the plaintext information to third parties even in the event that the medium or the access terminal is stolen or lost.

The condition information preferably contains information about a number of decryption and output times of the plaintext information. As the plaintext information is bar-coded with the number of output times being set, in addition to the encryption in this manner, the security level of the plaintext information is synergistically enhanced, and it is thus feasible to ensure prevention of leakage of the plaintext information to third parties even in the event that the medium or the access terminal is stolen or lost.

The condition information also preferably contains information about a place. As the plaintext information is bar-coded with the output place being set, in addition to the encryption in this manner, the security level of the plaintext information is synergistically enhanced, and it is thus feasible to ensure prevention of leakage of the plaintext information to third parties even in the event that the medium or the access terminal is stolen or lost.

In another aspect, an access terminal according to the present invention is an access terminal for acquiring bar-code information outputted to a predetermined medium and for outputting information contained in the bar-code information, the access terminal comprising: bar-code information acquiring means for acquiring the bar-code information from the predetermined medium; decrypting means for decrypting encrypted information contained in the bar-code information, to obtain plaintext information; access terminal information acquiring means for acquiring access terminal information that can be specified in the access terminal, when the bar-code information acquiring means acquires the bar-code information; and output controlling means for controlling output of the plaintext information, based on condition information contained in the bar-code information acquired by the bar-code information acquiring means, and the access terminal information acquired by the access terminal information acquiring means.

Since this access terminal is arranged to perform the control on whether the plaintext information is to be outputted, based on the access terminal information specified in the access terminal and the condition information, in addition to the encryption, it is feasible to ensure prevention of leakage of the plaintext information to third parties even in the event that the medium or the access terminal is stolen or lost.

Another access terminal according to the present invention is an access terminal for acquiring private information outputted to a predetermined medium, the access terminal comprising: bar-code information acquiring means for acquiring bar-code information from the predetermined medium; decrypting means for decrypting encrypted private information contained in the bar-code information; time information outputting means for outputting current time information when the bar-code information acquiring means acquires the bar-code information; and output controlling means for comparing term information contained in the bar-code information acquired by the bar-code information acquiring means, with the current time information outputted by the time information outputting means, and for controlling output of the private information.

Since this access terminal is arranged to perform the control on whether the private information is to be outputted, based on a valid period, in addition to the encryption, it is feasible to ensure prevention of leakage of the private information to third parties even in the event that the medium or the access terminal is stolen or lost.

Preferably, the access terminal information acquiring means acquires as the access terminal information, information about a time when the bar-code information acquiring means acquires the bar-code information, and the output controlling means controls the output of the plaintext information, based on the condition information contained in the bar-code information, and the information about the time. By adopting this configuration, the control on whether the plaintext information is to be outputted is performed based on the acquisition time of the bar-code information, in addition to the encryption, whereby it is feasible to ensure prevention of leakage of the plaintext information to third parties even in the event that the medium or the access terminal is stolen or lost.

The access terminal is also preferably configured as follows: the access terminal information acquiring means acquires as the access terminal information, number-of-acquisition-times information about a number of past acquisition times of the bar-code information by the bar-code information acquiring means, and the output controlling means controls the output of the plaintext information, based on the condition information contained in the bar-code information, and the number-of-acquisition-times information. Since this access terminal is arranged to perform the control on whether the plaintext information is to be outputted, based on the number of past acquisition times, in addition to the encryption, it is feasible to ensure prevention of leakage of the plaintext information to third parties even in the event that the medium or the access terminal is stolen or lost.

The access terminal is also preferably configured as follows: the access terminal information acquiring means acquires as the access terminal information, acquisition position information about a position where the bar-code information acquiring means acquires the bar-code information, and the output controlling means controls the output of the plaintext information, based on the condition information contained in the bar-code information, and the acquisition position information. Since this access terminal is arranged to perform the control on whether the plaintext information is to be outputted, based on the acquisition position, in addition to the encryption, it is feasible to ensure prevention of leakage of the plaintext information to third parties even in the event that the medium or the access terminal is stolen or lost.

In another aspect, a private information access system according to the present invention is a private information access system for outputting encrypted information resulting from encryption of predetermined plaintext information, as bar-code information to a predetermined medium and for letting an access terminal acquire the bar-code information outputted to the predetermined medium and output information contained in the bar-code information, the private information access system comprising: encrypting means for encrypting the plaintext information to obtain the encrypted information; and bar-code information outputting means for generating bar-code information containing the encrypted information and condition information defining a condition for decryption of the encrypted information to acquire the plaintext information, and for outputting the bar-code information to the predetermined medium; wherein the access terminal comprises: bar-code information acquiring means for acquiring the bar-code information from the predetermined medium; decrypting means for decrypting the encrypted information contained in the bar-code information, to obtain the plaintext information; access terminal information acquiring means for acquiring access terminal information that can be specified in the access terminal, when the bar-code information acquiring means acquires the bar-code information; and output controlling means for controlling output of the plaintext information, based on the condition information contained in the bar-code information acquired by the bar-code information acquiring means, and the access terminal information acquired by the access terminal information acquiring means.

In this private information access system, the bar-code information outputting means generates the bar-code information containing the encrypted information resulting from the encryption of the plaintext information, and the condition information defining the condition for acquisition of this plaintext information, and outputs the bar-code information to the predetermined medium. The access terminal acquiring the bar-code information, controls the output of the plaintext information, based on the condition information included in the bar-code information, and the access terminal information acquired by the access terminal information acquiring means. As the plaintext information is bar-coded with the acquisition condition for the target of the access terminal being set, in addition to the encryption in this manner, the security level of the plaintext information is synergistically enhanced, and it is thus feasible to ensure prevention of leakage of the plaintext information to third parties even in the event that the medium or the access terminal is stolen or lost.

Another private information access system according to the present invention is a private information access system comprising an access terminal for acquiring private information outputted to a predetermined medium, the private information access system comprising: encrypting means for encrypting the private information; and bar-code information outputting means for generating bar-code information in which the encrypted private information is associated with term information defining a valid period of the private information, and for outputting the bar-code information to the predetermined medium; wherein the access terminal comprises: bar-code information acquiring means for acquiring the bar-code information from the predetermined medium; decrypting means for decrypting the encrypted private information contained in the bar-code information; time information outputting means for outputting current time information when the bar-code information acquiring means acquires the bar-code information; and output controlling means for comparing the term information contained in the bar-code information acquired by the bar-code information acquiring means, with the current time information outputted by the time information outputting means, and for controlling output of the private information.

In this private information access system, the bar-code information outputting means generates the bar-code information of the encrypted private information in association with the term information defining the valid period of the private information, and outputs the bar-code to the predetermined medium. The access terminal acquiring the bar-code information, compares the term information in the bar-code information with the current time information outputted by the time information outputting means, and controls the output of the private information. As the private information is bar-coded with a valid period being set, in addition to the encryption in this manner, the security level of the private information is synergistically enhanced, and it is thus feasible to ensure prevention of leakage of the private information to third parties even in the event that the medium or the access terminal is stolen or lost.

The private information access system is preferably configured as follows: the bar-code information outputting means further associates a password with the encrypted information, and the output controlling means further compares the password with a password entered by a user when the bar-code information acquiring means acquires the bar-code information, and controls the output of the plaintext information. By adopting such a password, it becomes feasible to better ensure the prevention of leakage of the private information to third parties.

The private information access system is also preferably configured as follows: the bar-code information outputting means further associates terminal-identification information unique to the access terminal, with the encrypted information, and the output controlling means further compares the terminal-identification information with terminal-identification information stored in the access terminal itself, and controls the output of the plaintext information. In this case, the user is allowed to preliminarily limit the access terminal accessible to the private information, whereby it becomes feasible to ensure prevention of leakage of the private information to third parties more.

In another aspect, a private information access method according to the present invention is a private information access method of outputting encrypted information resulting from encryption of predetermined plaintext information, as bar-code information to a predetermined medium, the private information access method comprising: a step wherein encrypting means encrypts the plaintext information to obtain the encrypted information; and a step wherein bar-code information outputting means generates bar-code information containing the encrypted information and condition information defining a condition for decryption of the encrypted information to acquire the plaintext information, and outputs the bar-code information to the predetermined medium.

In this private information access method, the bar-code information outputting means generates the bar-code information containing the encrypted information resulting from the encryption of the plaintext information, and the condition information defining the condition for acquisition of this plaintext information, and outputs the bar-code information to the predetermined medium. As the plaintext information is bar-coded with the condition information being set, in addition to the encryption in this manner, the security level of the plaintext information can be synergistically enhanced.

Another private information access method according to the present invention is a private information access method of acquiring bar-code information outputted to the predetermined medium and outputting information contained in the bar-code information, the private information access method comprising the following steps executed in an access terminal: a step wherein bar-code information acquiring means acquires the bar-code information from the predetermined medium; a step wherein decrypting means decrypts encrypted information contained in the bar-code information, to obtain plaintext information; a step wherein access terminal information acquiring means acquires access terminal information that can be specified in the access terminal, when the bar-code information acquiring means acquires the bar-code information; and a step wherein output controlling means controls output of the plaintext information, based on condition information contained in the bar-code information acquired by the bar-code information acquiring means, and the access terminal information acquired by the access terminal information acquiring means.

In the private information access method, the access terminal compares the condition information contained in the bar-code information, with the access terminal information acquired by the access terminal information acquiring means, and controls the output of the plaintext information. As the control on whether the plaintext information is to be outputted is performed based on the condition information and the access terminal information specified in the access terminal, in addition to the encryption in this manner, it is feasible to ensure prevention of leakage of the plaintext information to third parties even in the event that the medium or the access terminal is stolen or lost.

Another private information access method according to the present invention is a private information access method of accessing private information outputted to a predetermined medium, through an access terminal, the private information access method comprising: a step wherein encrypting means encrypts the private information; and a step wherein bar-code information outputting means generates bar-code information in which the encrypted private information is associated with term information defining a valid period of the private information, and outputs the bar-code information to the predetermined medium; the private information access method further comprising the following steps executed in the access terminal: a step wherein bar-code information acquiring means acquires the bar-code information from the predetermined medium; a step wherein decrypting means decrypts the encrypted private information contained in the bar-code information; a step wherein time information outputting means outputs current time information when the bar-code information acquiring means acquires the bar-code information; and a step wherein output controlling means compares the term information contained in the bar-code information acquired by the bar-code information acquiring means, with the current time information outputted by the time information outputting means, and controls output of the private information.

In this private information access method, the bar-code information outputting means generates the bar-code information of the encrypted private information in association with the term information defining a valid period of this private information, and outputs the bar-code information to the predetermined medium. The access terminal acquiring the bar-code information, compares the term information contained in the bar-code information, with the current time information outputted by the time information outputting means, and controls the output of the private information. As the private information is bar-coded with the valid period being set, in addition to the encryption in this manner, the security level of the private information is synergistically enhanced, and it is thus feasible to ensure prevention of leakage of the private information to third parties even in the event that the medium or the access terminal is stolen or lost.

In another aspect, an information processing program according to the present invention is an information processing program for outputting encrypted information resulting from encryption of predetermined plaintext information, as bar-code information to a predetermined medium, the information processing program letting a computer function as: encrypting means for encrypting the plaintext information to obtain the encrypted information; and bar-code information outputting means for generating bar-code information containing the encrypted information and condition information defining a condition for decryption of the encrypted information to acquire the plaintext information, and for outputting the bar-code information to the predetermined medium.

In this information processing program, the plaintext information is bar-coded with the condition information being set, in addition to the encryption, whereby the security level of the plaintext information can be synergistically enhanced.

Another information processing program according to the present invention is an information processing program for outputting private information to a predetermined medium, the information processing program letting a computer function as: encrypting means for encrypting the private information; and bar-code information outputting means for generating bar-code information in which the encrypted private information is associated with term information defining a valid period of the private information, and for outputting the bar-code information to the predetermined medium.

In this information processing program, the private information is bar-coded with the valid period being set, in addition to the encryption, whereby the security level of the private information can be synergistically enhanced.

In still another aspect, a private information access program according to the present invention is a private information access program for letting an access terminal acquire bar-code information outputted to a predetermined medium, and output information contained in the bar-code information, the private information access program letting the access terminal function as: bar-code information acquiring means for acquiring the bar-code information from the predetermined medium; decrypting means for decrypting encrypted information contained in the bar-code information, to obtain plaintext information; access terminal information acquiring means for acquiring access terminal information that can be specified in the access terminal, when the bar-code information acquiring means acquires the bar-code information; and output controlling means for controlling output of the plaintext information, based on condition information contained in the bar-code information acquired by the bar-code information acquiring means, and the access terminal information acquired by the access terminal information acquiring means.

In this private information access program, the control on whether the plaintext information is to be outputted is performed based on the condition information and the access terminal information specified in the access terminal, in addition to the encryption, whereby it is feasible to ensure prevention of leakage of the plaintext information to third parties even in the event that the medium or the access terminal is stolen or lost.

Another private information access program according to the present invention is a private information access program for letting an access terminal acquire private information outputted to a predetermined medium, the private information access program letting the access terminal function as: bar-code information acquiring means for acquiring the bar-code information from the predetermined medium; decrypting means for decrypting encrypted private information contained in the bar-code information; time information outputting means for outputting current time information when the bar-code information acquiring means acquires the bar-code information; and output controlling means for comparing term information contained in the bar-code information acquired by the bar-code information acquiring means, with the current time information outputted by the time information outputting means, and for controlling output of the private information.

In this private information access program, the control on whether the private information is to be outputted is performed based on the valid period, in addition to the encryption, whereby it is feasible to ensure prevention of leakage of the private information to third parties even in the event that the medium or the access terminal is stolen or lost.

### Effect of the Invention

As described above, the information processing device, access terminal, private information access system, private information access method, information processing program, and private information access program according to the present invention ensure the prevention of leakage of private information to third parties.

### Brief Description of the Drawings

Fig. 1 is a configuration diagram showing a first embodiment of a private information access system according to the present invention.
Fig. 2 is a drawing showing an example of information stored in a personal information storage.
Fig. 3 is a drawing showing an example of data generated in a bar-code information generator.
Fig. 4 is a drawing showing an example of a paper medium on which two-dimensional bar-code information is printed.
Fig. 5 is a flowchart showing an operation of an information processing device shown in Fig. 1.
Fig. 6 is a flowchart showing an operation of an access terminal shown in Fig. 1.
Fig. 7 is a drawing showing an example of screens displayed in a display section of the access terminal.
Fig. 8 is a configuration diagram showing a first embodiment of an information processing program according to the present invention.
Fig. 9 is a configuration diagram showing a first embodiment of a private information access program according to the present invention.
Fig. 10 is a configuration diagram showing a second embodiment of a private information access system according to the present invention.
Fig. 11 is a drawing showing an example of data generated in a bar-code information generator in Fig 10.
Fig. 12 is a flowchart showing an operation of an information processing device shown in Fig. 10.
Fig. 13 is a flowchart showing an operation of an access terminal shown in Fig. 10.
Fig. 14 is a configuration diagram showing a second embodiment of an information processing program according to the present invention.
Fig. 15 is a configuration diagram showing a second embodiment of a private information access program according to the present invention.

### Description of Reference Symbols

1 personal information access system (private information access system); 10 information processing device; 20 access terminal; 30 two-dimensional bar-code information; 101 encryption part (encrypting means); 106 bar-code information output (bar-code information outputting means); 201 bar-code information acquirer (bar-code information acquiring means); 202 decryption part (decrypting means); 203 time information output (time information outputting section); 204 output controller (output controlling means); 52 information processing program; 62 personal information access program (private information access program); M paper medium (predetermined medium).

### Best Mode for Carrying out the Invention

Preferred embodiments of the information processing device, access terminal, private information access system, private information access method, information processing program, and private information access program according to the present invention will be described below in detail with reference to the drawings.

### [First Embodiment]

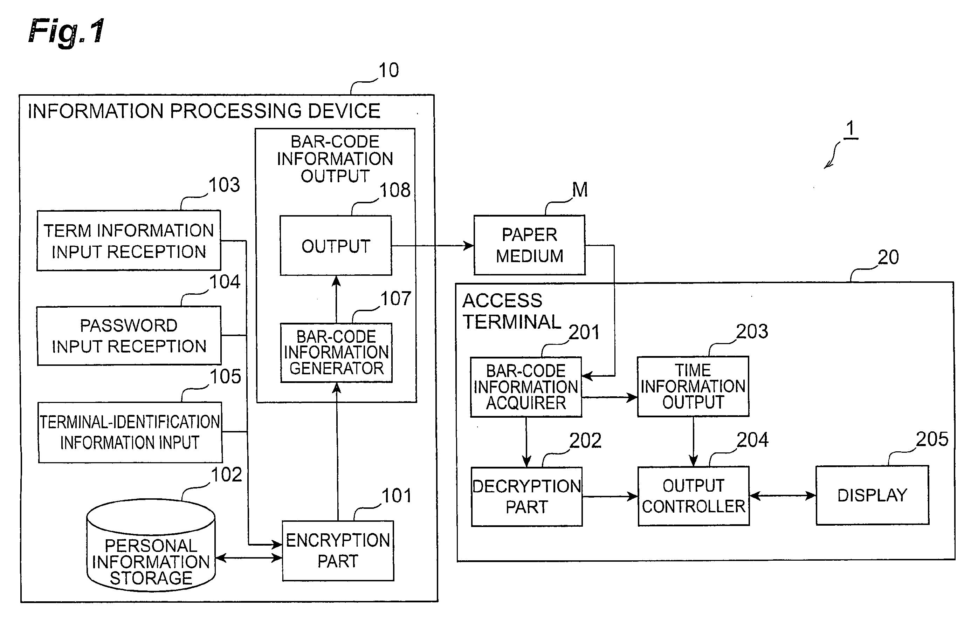

Fig. 1 is a configuration diagram showing a personal information access system being the first embodiment of the private information access system configured according to the present invention. As shown in Fig. 1, the personal information access system 1 is configured as a system having an information processing device 10 for printing private information such as personal information of debtors on a paper medium (predetermined medium) M, and an access terminal 20 for acquiring the personal information through the paper medium M, and used by users in the business of personal debt collection.

The information processing device 10 is physically a computer system provided with a CPU, memories, a communication interface, a storage part such as a hard disk, a display part such as a display, etc. and is installed, for example, in an office of a debt collection company. This information processing device 10 is functionally equipped with encryption part (encrypting means) 101, personal information storage 102, term information input reception 103, password input reception 104, terminal-identification information input reception 105, and bar-code information output (bar-code information outputting means) 106.

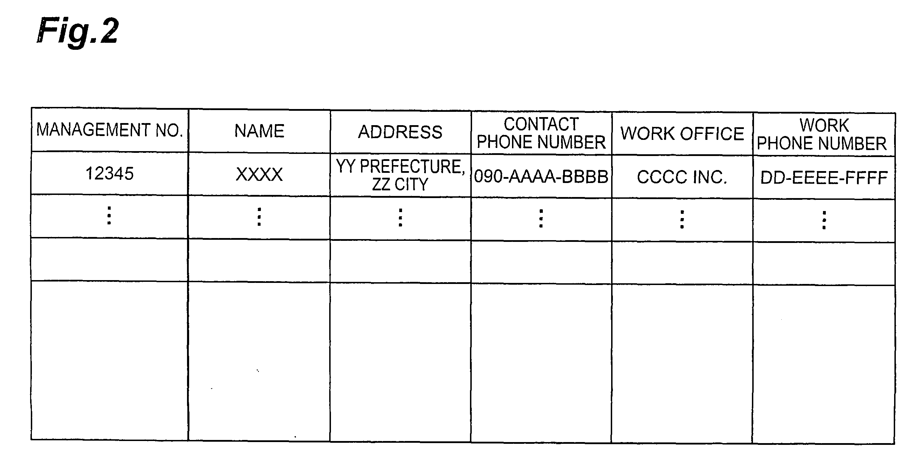

The encryption part 101 is a part that accepts user's selection of personal information and that acquires and encrypts the personal information selected out of the personal information stored in the personal information storage 102. Fig. 2 is an example of the information stored in the personal information storage 102. In the example shown in Fig. 2, the personal information storage 102 stores information of debtor's name "XXXX," address "YY Prefecture, ZZ City," contact phone number "090-AAAA-BBBB," office "CCCC Inc.," and work phone number "DD-EEEE-FFFF" in association with management No. "12345."

The encryption part 101 receives later-described term information, password, and terminal-identification information from the term information input reception 103, password input reception 104, and terminal-identification information input reception 105. Then the encryption part 101 encrypts each of the received information pieces, and the personal information acquired from the personal information storage 102 by a predetermined method, and outputs the encrypted information to the bar-code information output 106. The target of the encryption herein may be only the personal information.

The term information input reception 103 is a part that accepts user's input of an expiration date of personal information. The term information input reception 103 outputs the term information indicating the input expiration date, to the encryption part 101. The password input reception 104 is a part that accepts user's input of a password. The password input reception 104 outputs the input password to the encryption part 101. The terminal-identification information input reception 105 is a part that accepts user's input of unique terminal-identification information (e.g., a serial number of a terminal equipment) of an access terminal that is permitted to acquire the personal information. The terminal-identification information input reception 105 outputs the input terminal-identification information to the encryption part 101.

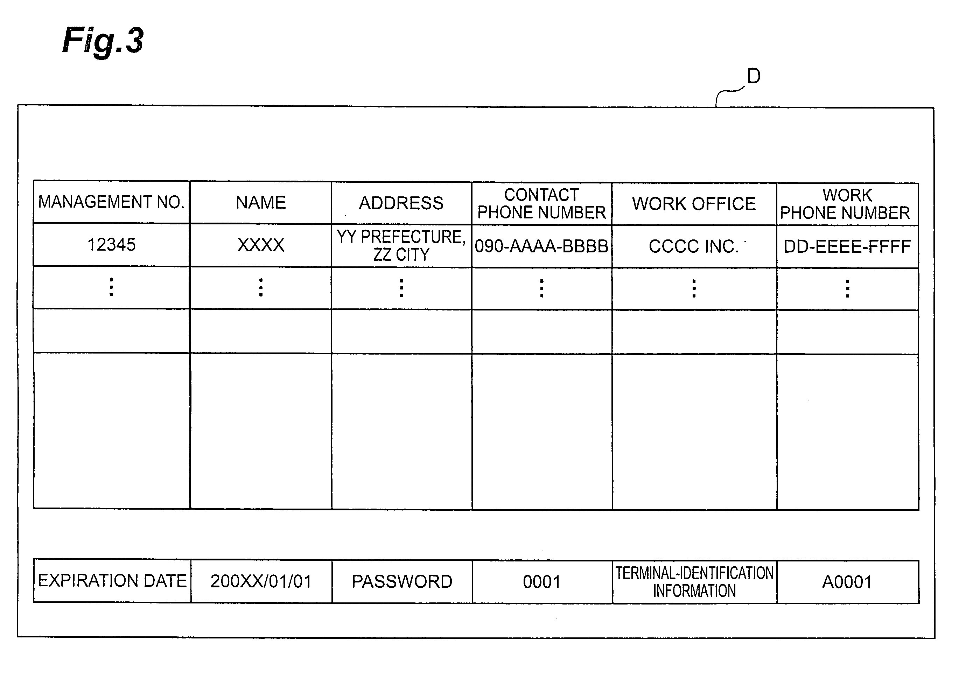

The bar-code information output 106 is a part that generates bar-code information containing the personal information and that outputs the bar-code information to the paper medium M, and has bar-code information generator 107 and output part 108. The bar-code information generator 107 is a part that receives the encrypted personal information, term information, password information, and terminal-identification information from the encryption part 101, and generates data D as an origin for generation of bar-code information. Fig. 3 shows an example of this data D. In the example shown in Fig. 3, the encrypted personal information is associated with expiration date "20XX/01/01," password "0001," and terminal-identification information "A0001." Then the bar-code information generator 107 outputs this data D to the output part 108.

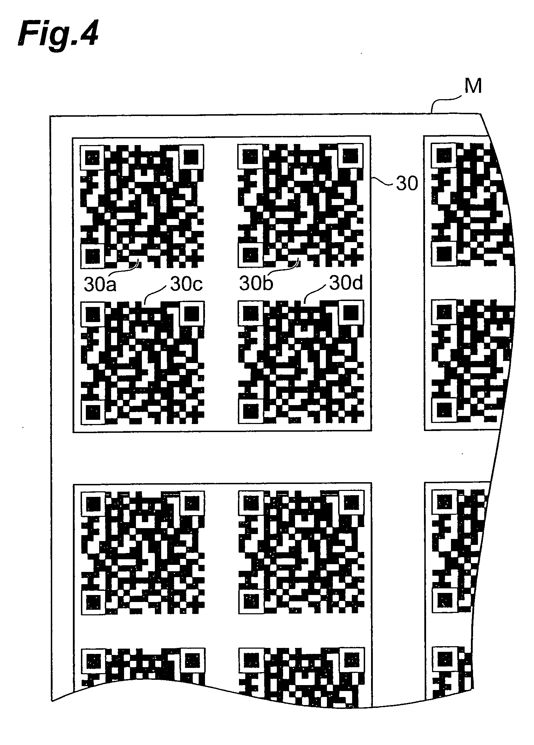

The output part 108 is a part that converts the data D received from the bar-code information generator 107, into two-dimensional bar-code information and that prints it on the paper medium M. This output part 108 prints the two-dimensional bar-code information 30 on the paper medium M, as shown in Fig. 4. In the present embodiment, one section of two-dimensional bar-code information 30 is composed of four segments of small bar-code information 30a-30d, and a plurality of (e.g., 20) personal information pieces are included in this two-dimensional bar-code information section 30.

Subsequently, the access terminal 20 will be described in detail with reference to Fig. 1. The access terminal 20 is assumed to be a cell phone, a PHS (Personal Handyphone System), a PDA (Personal Digital Assistant), or the like held by a staff member (user) who visits debtors. This access terminal 20 physically has a CPU (central processing unit), storage devices such as memories, an input device such as push buttons, etc. and a dedicated application for use of the personal information access system 1 is preliminarily installed in the access terminal 20. The access terminal 20 has the following functional components: bar-code information acquirer (bar-code information acquiring means) 201, decryption part (decrypting means) 202, time information output (access terminal information acquiring means and time information outputting means) 203, output controller (output controlling means) 204, and display part 205.

The bar-code information acquirer 201 is a part that acquires the two-dimensional bar-code information 30 printed on the paper medium M, and acquires the two-dimensional bar-code information 30, for example, by means of a camera incorporated in the access terminal 20. This bar-code information acquirer 201 photographs each row of the small bar-code segments 30a-30d on the paper medium M in accordance with a user's predetermined operation to acquire image data, and outputs data D obtained by combining those image data, to the decryption part 202. The bar-code information acquirer 201 outputs instruction information to instruct the time information output 203 to output current time information, at the timing of photographing of the two-dimensional bar-code information 30.

The decryption part 202 is a part that receives the data D from the bar-code information acquirer 201 and that decrypts the encrypted personal information, term information, password, and terminal-identification information included in the data D. The decryption part 202 outputs each of the decrypted information to the output controller 204.

The time information output 203 is a part that outputs the current time information indicating the current time when the bar-code information acquirer 201 photographs the two-dimensional bar-code information 30, and is a timer incorporated in the access terminal 20, or a timer running on the aforementioned application dedicated to the system 1. When the time information output 203 receives the instruction information from the bar-code information acquirer 201, it outputs the current time information to the output controller 204.

The output controller 204 is a part that controls output of the personal information in the two-dimensional bar-code information 30 acquired by the bar-code information acquirer 201. More specifically, when the output controller 204 receives the data D from the decryption part 202, it first compares the terminal-identification information in the data D with terminal-identification information stored in a storage (not shown) of the access terminal 20 itself. When they disagree, the output controller 204 rejects output of the acquired personal information and indicates an error display on the display part 205.

When the two terminal-identification information pieces agree with each other, the output controller 204 then makes the display part 205 function as a password input reception, and accepts user's input of a password. Then it compares this password with that included in the data D. When the two passwords disagree at this time, the output controller 204 rejects output of the acquired personal information and indicates an error display on the display part 205.

When the two passwords agree with each other, the output controller 204 further compares the current time information received from the time information output 203, with the term information included in the data D. When the current time indicated by the current time information is beyond the expiration date indicated by the term information, the output controller 204 rejects output of the acquired personal information and indicates an error display on the display part 205. When the current time indicated by the current time information is within the expiration date indicated by the term information, the output controller 204 permits output of the acquired personal information and indicates a display of the personal information on the display part 205.

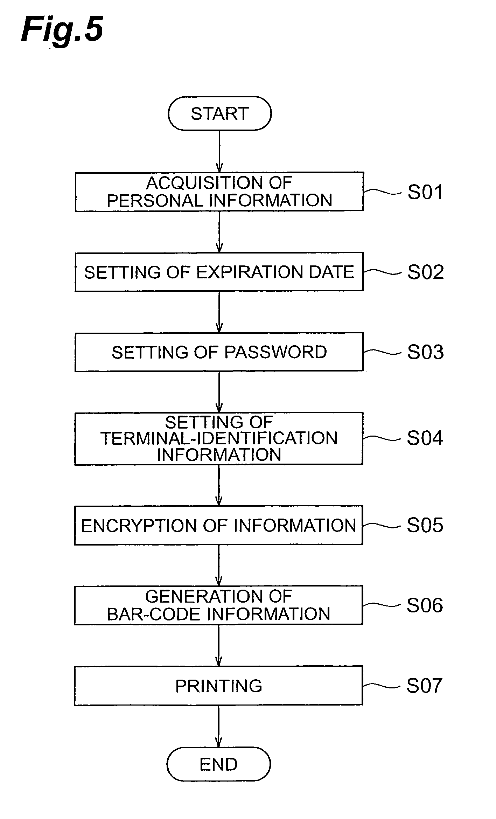

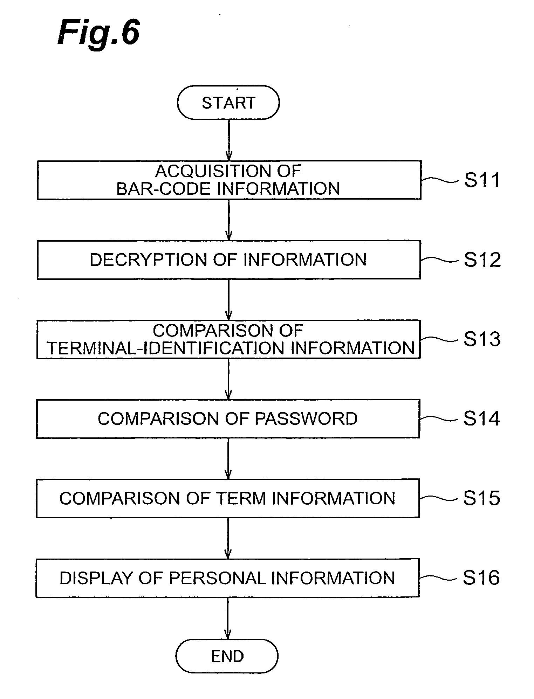

The operation of the above-described personal information access system 1 will be described below with reference to the flowcharts shown in Figs. 5 and 6. First, the operation of the information processing device 10 will be described with reference to Fig. 5.

First, when the user accesses the information processing device 10, a display of a list of the personal information stored in the personal information storage 102 is presented to the user. When user's selection of personal information is accepted, the encryption part 101 acquires the selected personal information from the personal information storage 102 (step S01). Next, the term information input reception 103 accepts input of expiration date of the selected personal information from the user (step S02). After accepting the input of the expiration date, the password input reception 104 then accepts input of a password (step S03), and the terminal-identification information input reception 105 further accepts input of terminal-identification information (step S04). The input term information, password, and terminal-identification information is then fed to the encryption part 101, the encryption part 101 encrypts the information together with the personal information (step S05), and it outputs the encrypted data to the bar-code information generator 107.

When receiving the encrypted personal information, term information, password, and terminal-identification information from the encryption part 101, the bar-code information generator 107 then generates data D as an origin for generation of bar-code information (step S06). The generated data D is fed to the output part 108 and this output part 108 prints the two-dimensional bar-code information 30 on the paper medium M (step S07).

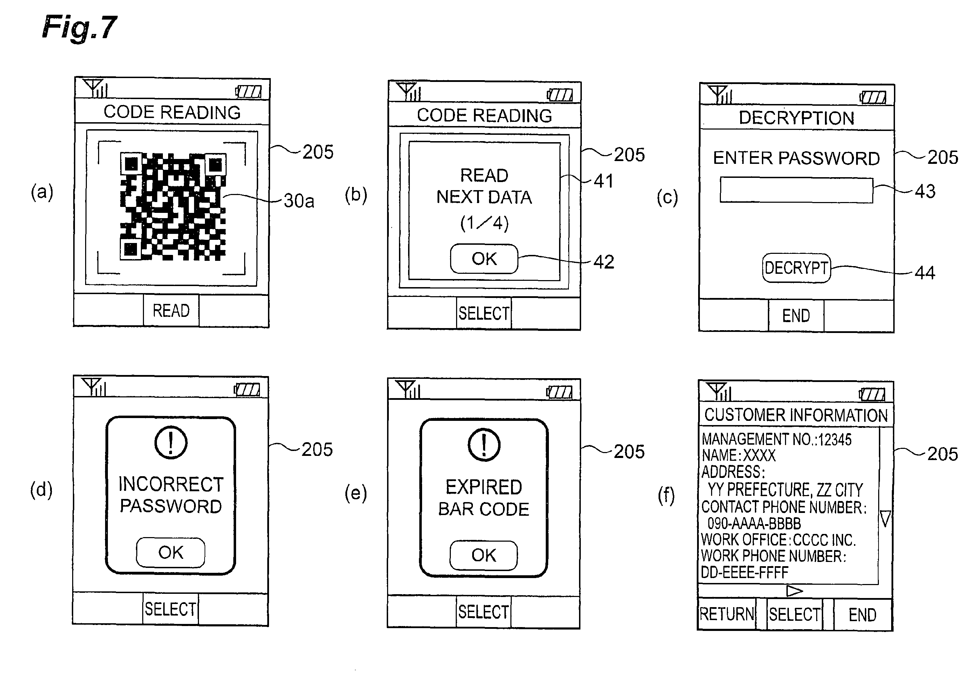

Subsequently, the operation of the access terminal 20 will be described with reference to Fig. 6. Images displayed on the display part 205 with the operation of the access terminal 20 will be explained with reference to Fig. 7 as occasion may demand.

First, the camera as the bar-code information acquirer 201 is activated by a user's predetermined operation and photographs the small bar-code segment 30a on the paper medium M, as shown in Fig. 7 (a) (step S11). Then, as shown in Fig. 7 (b), the display part 205 provides a display including a text region 41 indicating "Read Next Data," and a button 42 indicating "OK," to urge the user to photograph the remaining small bar-code segments 30b-30d. After completion of the photography of all the small bar-code segments 30a-30d, the bar-code information acquirer 201 outputs data D obtained by combining them, to the decryption part 202. The bar-code information acquirer 201 outputs the instruction information to instruct the time information output 203 to output the current time information, at the timing of photography of the two-dimensional bar-code information 30.

Then the decryption part 202 receives the data D from the bar-code information acquirer 201 and decrypts the encrypted personal information, term information, password, and terminal-identification information included in this data D (step S12), and the decryption part 202 outputs the decrypted data to the output controller 204. When receiving the data D from the decryption part 202, the output controller 204 first compares the terminal-identification information included in the data D, with the terminal-identification information stored in the storage (not shown) of the access terminal 20 itself (step S13). When the two terminal-identification information pieces disagree, the output controller 204 rejects output of the acquired personal information and indicates an error display on the display part 205 (not shown).

When the two terminal-identification information pieces agree with each other, the output controller 204 then makes the display part 205 function as a password input reception. At this time, a password input box 43 and a decryption button 44 are displayed on the display part 205, as shown in Fig. 7 (c). When the user enters the password in the password input box 43 and selects the decryption button 44, the output controller 204 compares the input password with the password included in the data D (step S 14). When the two passwords disagree at this time, the output controller 204 rejects output of the acquired personal information and displays a message box 45 indicating "Incorrect Password," as shown in Fig. 7 (d), on the display part 205.

When the two passwords agree with each other, the output controller 204 further compares the current time information received from the time information output 203, with the term information included in the data D (step S 15). When the current time indicated by the current time information is beyond the expiration date indicated by the term information, the output controller 204 rejects output of the acquired personal information and displays a message box 46 indicating "Expired Bar Code," as shown in Fig. 7 (e), on the display part 205. On the other hand, when the current time indicated by the current time information is within the expiration date indicated by the term information, the output controller 204 permits output of the acquired personal information. Then the display part 205 presents a display of the personal information, i.e., management No. "12345," debtor's name "XXXX," address "YY Prefecture, ZZ City," contact phone number "090-AAAA-BBBB," office "CCCC Inc.," and work phone number "DD-EEEE-FFFF," as shown in Fig. 7 (f) (step S16).

In this personal information access system 1, as described above, the bar-code information output 106 of the information processing device 10 bar-codes the personal information in association with the term information defining the expiration date of the personal information, and the bar-code information is printed on the paper medium M. The access terminal 20 acquiring the two-dimensional bar-code information 30 controls the output of the personal information on the basis of the comparison between the term information and the current time information and displays only the personal information permitted to output, on the display part 205. In the personal information access system 1, as just described, the security level of personal information is synergistically enhanced by the encryption and by the bar-coding of the personal information with the expiration date being set. This achieves the following effect: for example, even if the user simultaneously loses both of the portable paper medium M and access terminal 20, the personal information will be automatically invalidated after a lapse of a certain period since it is printed on the paper medium M, and it thus ensures prevention of leakage of personal information to third parties. Furthermore, the personal information access system 1 preliminarily bar-codes the password and the terminal-identification information of the access terminal permitted to gain access, in association with the personal information, whereby the security level of personal information is further improved.

The following will describe an information processing program 52 for letting a computer function as the aforementioned information processing device 10, and a personal information access program (private information access program) 62 for letting a terminal function as the aforementioned access terminal 20.

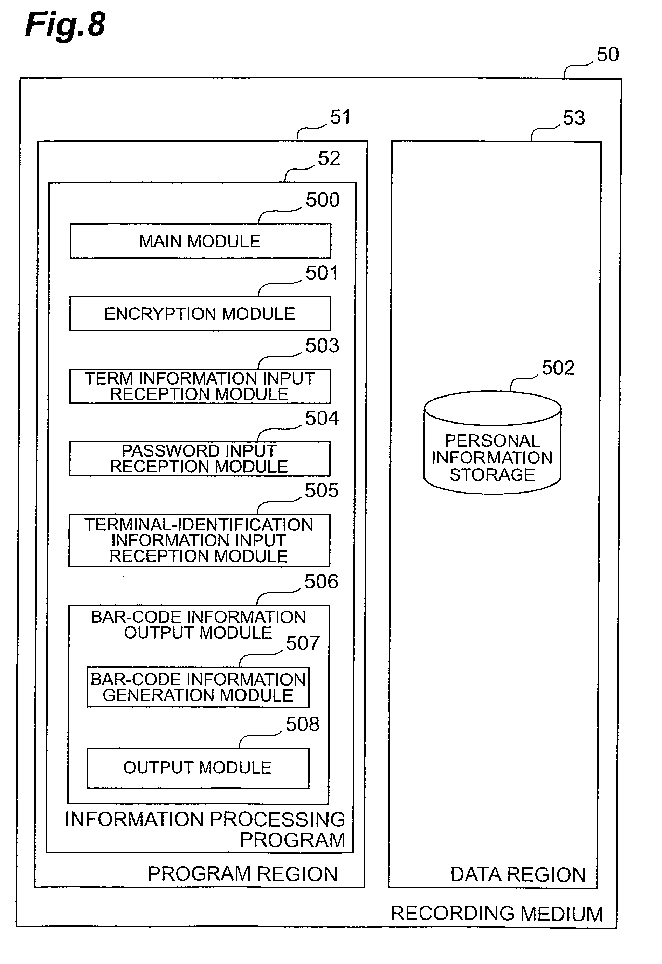

Fig. 8 is a drawing showing a configuration of a recording medium 50 storing the information processing program 52. The recording medium 50 is, for example, a magnetic disk, an optical disk, a CD-ROM, or a memory incorporated in a computer. The recording medium 50, as shown in Fig. 8, is provided with a program region 51 storing a program, and a data region 53. The information processing program 52 is recorded in this program region 51, and the information processing program 52 is provided with main module 500 for generally controlling processing, encryption module 501, term information input reception module 503, password input reception module 504, terminal-identification information input reception module 505, and bar-code information output module 506. The bar-code information output module 506 is comprised of bar-code information generation module 507 and output module 508.

It is noted herein that functions implemented by respective operations of the encryption module 501, term information input reception module 503, password input reception module 504, terminal-identification information input reception module 505, and bar-code information output module 506 are the same as the functions of the aforementioned encryption part 101, term information input reception 103, password input reception 104, terminal-identification information input reception 105, and bar-code information output 106 of the information processing device 10, respectively.

The data region 53 is provided with personal information storage 502 storing personal information, which is similar to the personal information storage 102 of the information processing device 10. This personal information storage 502 may be stored in another recording medium.

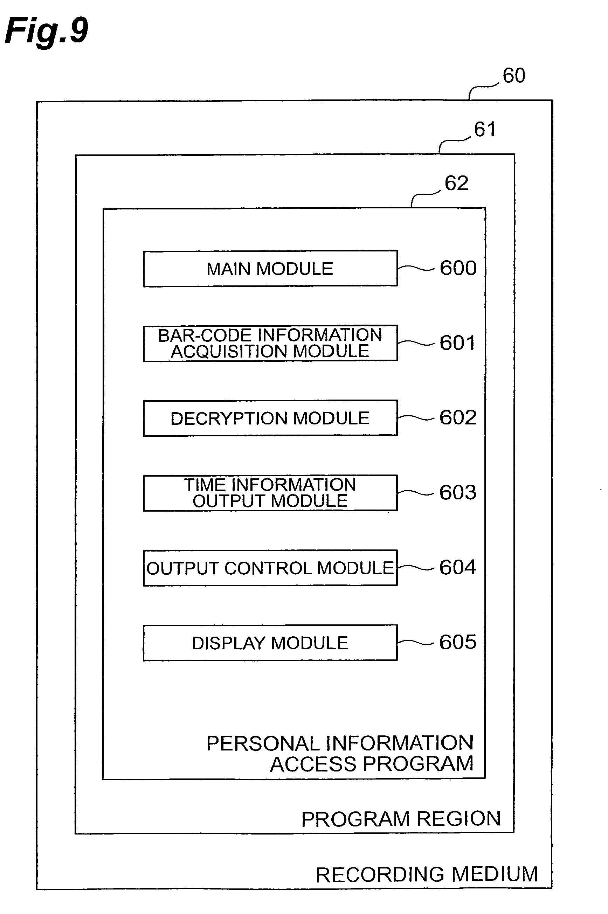

Fig. 9 is a drawing showing a configuration of a recording medium 60 storing the personal information access program 62. The recording medium 60 is provided with a program region 61 storing a program, as shown in Fig. 9. The personal information access program 62 is recorded in this program region 61, and this personal information access program 62 is provided with main module 600 for generally controlling processing, bar-code information acquisition module 601, decryption module 602, time information output module 603, output control module 604, and display module 605. Functions implemented by respective operations of the modules 601-605 are the same as the functions of the aforementioned bar-code information acquirer 201, decryption part 202, time information output 203, output controller 204, and display part 205 of the access terminal 20, respectively.

### [Second Embodiment]

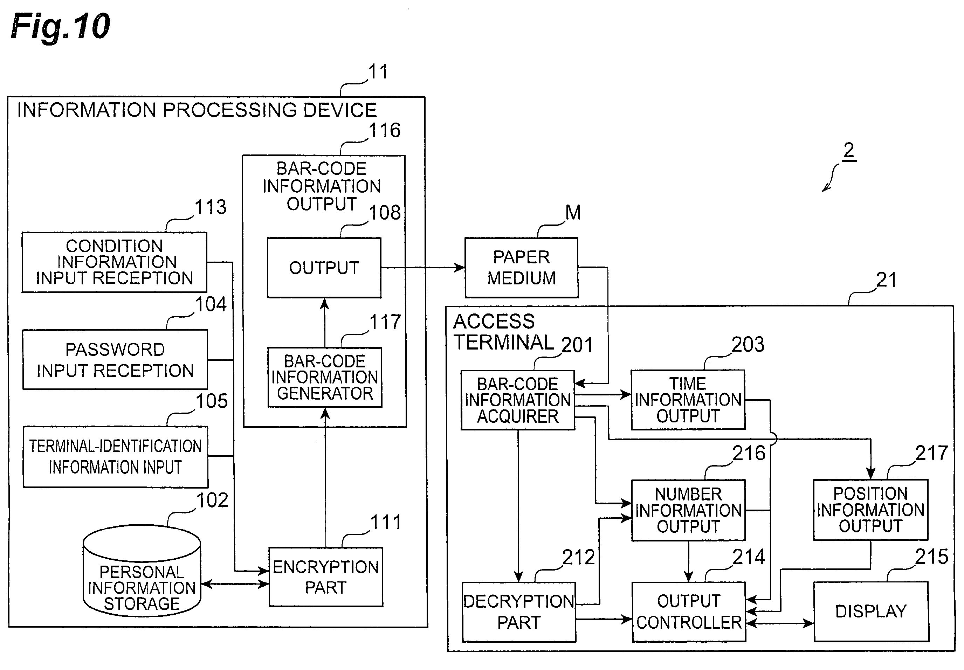

The second embodiment of the present invention will be described below. Fig. 10 is a configuration diagram showing the second embodiment of the private information access system according to the present invention. The private information access system 2 shown in the same drawing is different from the first embodiment in that information processing device 11 adds a start time to the expiration date in the data D and adds information about a number of readable times and a readable place to the data D, on the occasion of outputting the bar-code information to the paper medium M, and in that access terminal 21 determines the propriety of output of personal information on the basis of acquisition conditions of personal information added to the data D and access terminal information specified in the access terminal 21.

Among the components of the private information access system 2, only those different in function from the private information access system 1 will be described below.

Condition information input reception 113 of the information processing device 11 accepts from the user, condition information to define conditions for acquisition of the personal information on the access terminal 21 side. Specifically, the condition information input reception 113 accepts input of term information including a start date and an end date being a period of validity of the personal information, as the condition information. Furthermore, the condition information input reception 113 accepts input of a number of readable times defining a limited number of outputs of the personal information, and a readable place defining a place where output of the personal information is permitted in the access terminal 21. The condition information input reception 113 outputs these condition information pieces accepted from the user, to encryption part 111.

The encryption part 111 selects and acquires the personal information stored in the personal information storage 102, based on user's selection, encrypts the password and terminal-identification information received from the password input reception 104 and from the terminal-identification information input reception 105 and the term information, number of readable times, and readable place received from the condition information input reception 113, together with the personal information by a predetermined method, and outputs the encrypted data to bar-code information output 116. A target of the encryption herein may be only the personal information.

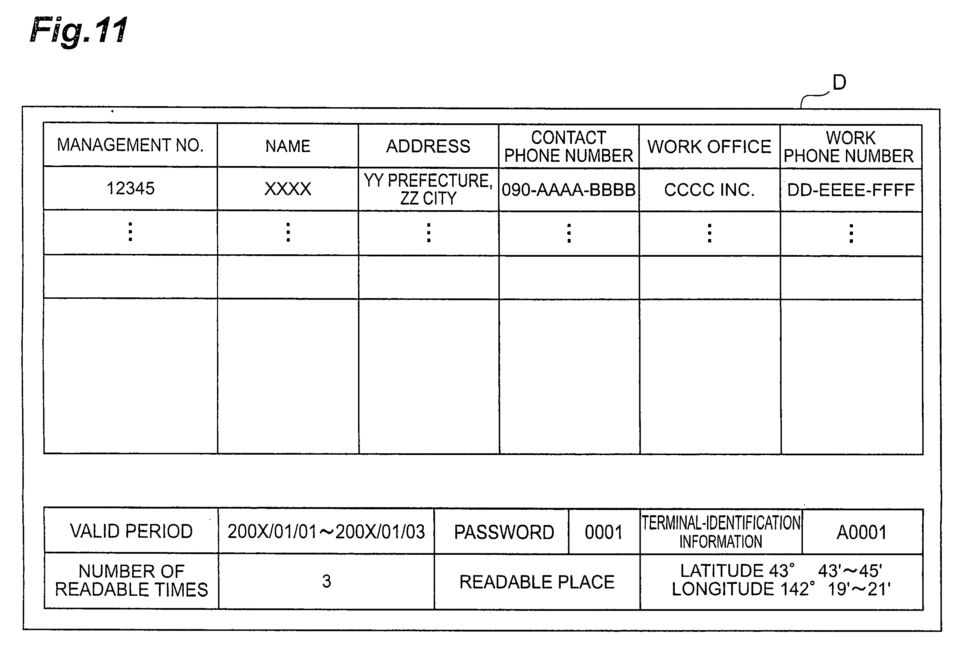

Bar-code information generator 117 of the bar-code information output 106 receives the encrypted personal information, term information, password, terminal-identification information, number of readable times, and readable place from the encryption part 111 and generates data D as an origin for generation of bar-code information. Fig. 11 shows an example of this data D. In the example shown in Fig. 11, the encrypted personal information is associated with a valid period "200X/01/01-200X/01/03" including a start date and an end date, password "0001," terminal-identification information "A0001," number of readable times "3," and readable place "latitude 43°43'-45', longitude 142° 19'-21'." Then the bar-code information generator 117 outputs this data D to the output part 108.

Decryption part 212 of the access terminal 21 decrypts the encrypted personal information, term information, password, terminal-identification information, number of readable times, and readable place included in the data D.

Number information output (access terminal information acquiring means) 216 specifies the number of acquisition times being the access terminal information in the access terminal, when the bar-code information acquirer 201 acquires the two-dimensional bar-code information 30. This number of acquisition times indicates how many times the personal information decrypted by the decryption part 212 was acquired and displayed on display part 215 in the access terminal 21 in the past. In the access terminal 21, data about the number of outputs of personal information on the display part 215 is held in association with the pertinent personal information in a storage device such as a memory, and the number information output 216 reads this data to acquire the number of acquisition times for each personal information. The number information output 216 outputs the specified number of acquisition times to the output controller 214.

Position information output (access terminal information acquiring means) 217 has a position measuring function such as the GPS positioning function and acquires position information (acquisition position information) consisting of latitude information and longitude information of the positioning terminal 21 at a point of time when the bar-code information acquirer 201 acquires the two-dimensional bar-code information 30. The position information output 217 may determine the position by specifying a radio base station in a communication area in which the access terminal 21 is located. The position information output 217 outputs the specified position information to output controller 214.

The output controller 214 performs the following processing in conjunction with output control of personal information based on the password and the terminal position information. Namely, when receiving the data D from the decryption part 212, the output controller 214 compares the current time information received from the time information output 203, with the valid period included in the data D. When the time indicated by the current time information is off the period between the start date and the end date indicated by the valid period, the output controller rejects output of the personal information and indicates an error display on the display part 215. On the other hand, when the time indicated by the current time information is within the period between the start date and the end date indicated by the valid period, the output controller moves to the next determination on the number of readable times.

The output controller 214 compares the number of acquisition times of the pertinent personal information received from the number information output 216, with the number of readable times included in the data D of the pertinent personal information. When the number of acquisition times is not less than the number of readable times, the output controller rejects output of the personal information and indicates an error display on the display part 215. On the other hand, when the number of acquisition times is less than the number of readable times, the output controller moves to the next determination on the readable place.

The output controller 214 compares the acquisition position information received from the position information output 216, with the readable place included in the data D of the pertinent personal information. When the position indicated by the acquisition position information is a predetermined distance or more apart from the position indicated by the readable place, the output controller rejects output of the personal information and indicates an error display on the display part 215. On the other hand, when the position indicated by the acquisition position information is less than the predetermined distance from the position indicated by the readable place, the output controller permits output of the personal information and presents a display of the pertinent personal information on the display part 215. The above control of the output controller 214 may be performed by processing using code information for specifying the place, as position information.

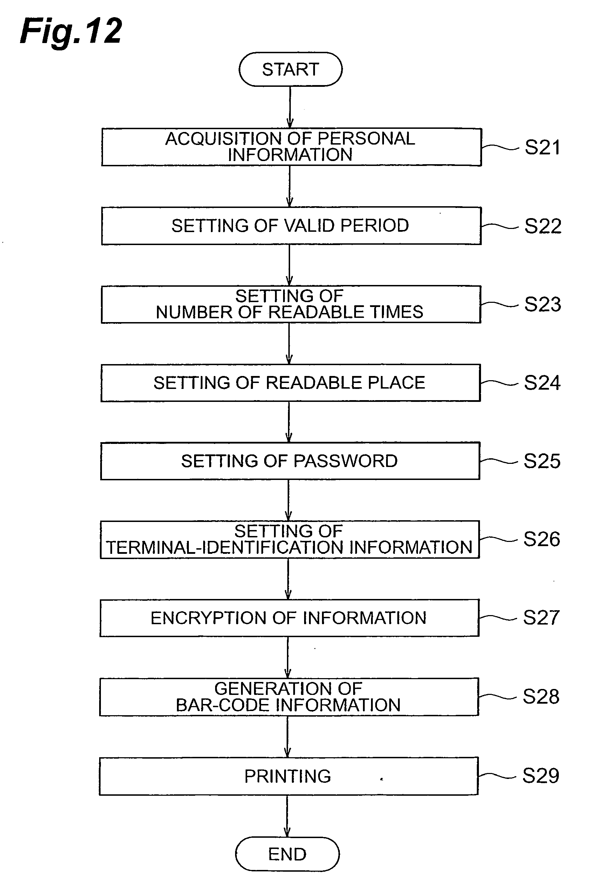

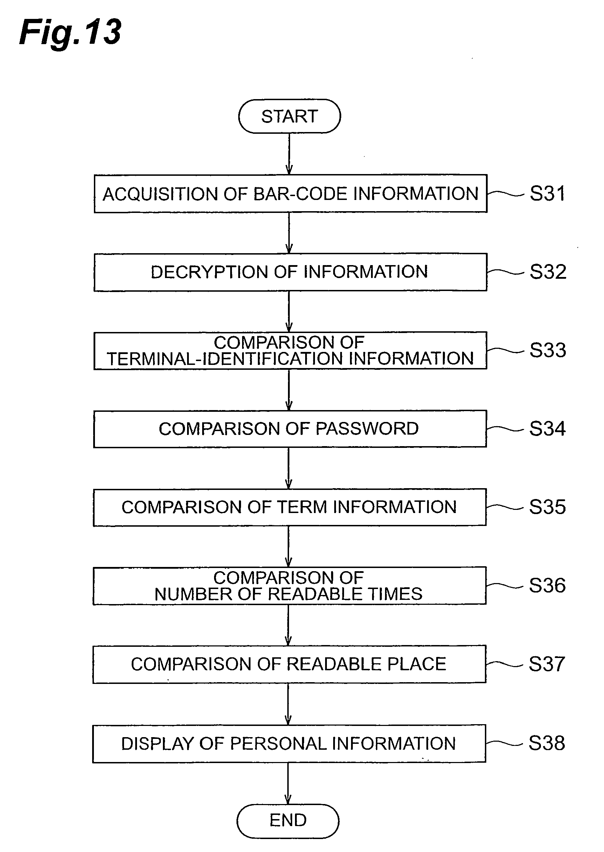

The operation of the above-described personal information access system 2 will be described below with reference to the flowcharts shown in Figs. 12 and 13. First, the operation of the information processing device 11 will be described with reference to Fig. 12.

First, when the user accesses the information processing device 11, the user is presented a display of a list of personal information stored in the personal information storage 102. When user's selection of personal information is accepted, the encryption part 111 acquires the selected personal information from the personal information storage 102 (step S21). Then the condition information input reception 113 accepts user's input of a valid period of the selected personal information (step S22). After the valid period is entered, the condition information input reception 113 then accepts input of a number of readable times (step S23) and further accepts input of a readable place (step S24). Thereafter, the password input reception 104 accepts input of a password (step S25), and the terminal-identification information input reception 105 further accepts input of terminal-identification information (step S26). Then the input term information, password, terminal-identification information, number of readable times, and readable place are fed to the encryption part 111, and then the encryption part 111 encrypts them together with the personal information (step S27), and then outputs the encrypted data to the bar-code information generator 117.

When receiving the encrypted personal information, term information, password, terminal-identification information, number of readable times, and readable place from the encryption part 111, the bar-code information generator 117 then generates data D as an origin for generation of bar-code information (step S28). The generated data D is fed to the output part 108, and this output part 108 prints two-dimensional bar-code information 30 on the paper medium M (step S29).

Subsequently, the operation of the access terminal 21 will be described with reference to Fig. 13. Images displayed on the display part 215 with the operation of the access terminal 21 are similar to those shown in Fig. 7 and are thus omitted from the description herein.

First, the camera as the bar-code information acquirer 201 is activated by a user's predetermined operation and photographs the small bar-code information on the paper medium M (step S31). After completion of the photography of all the small bar-code segments, the bar-code information acquirer 201 combines them and outputs the resultant data D to the decryption part 212. The bar-code information acquirer 201 outputs instruction information to instruct the time information output 203 to output the current time information, instruction information to instruct the number information output 216 to output the number of acquisition times, and instruction information to instruct the position information output 217 to output the position information, at the timing of photography of the two-dimensional bar-code information.

Then the decryption part 212 receives the data D from the bar-code information acquirer 201, decrypts the encrypted personal information, term information, password, terminal-identification information, number of readable times, and readable place included in this data D (step S32), and outputs the decrypted data to the output controller 214. When receiving the data D from the decryption part 212, the output controller 214 first compares the terminal-identification information in the data D with the terminal-identification information stored in a storage (not shown) of the access terminal 20 itself (step S33). When the two terminal-identification information pieces disagree, the output controller 214 rejects output of the acquired personal information and indicates a display of an error message on the display part 215 (not shown).

When the two terminal-identification information pieces agree with each other, the output controller 214 then makes the display part 215 function as the password input reception. The output controller 214 compares the input password with the password included in the data D (step S34). When the two passwords disagree, the output controller 214 rejects output of the acquired personal information and displays an error message on the display part 215.

When the two passwords agree with each other, the output controller 214 further compares the current time information received from the time information output 203, with the term information included in the data D (step S35). When the current time indicated by the current time information is off the period between the start date and the end date indicated by the term information, the output controller 214 rejects output of the acquired personal information and displays an error message on the display part 215.

On the other hand, when the current time indicated by the current time information is within the period between the start date and the end date indicated by the term information, the output controller 214 further compares the number of acquisition times received from the number information output 216, with the number of readable times included in the data D (step S36). When the number of acquisition times is not less than the number of readable times, the output controller 214 rejects output of the acquired personal information and displays an error message on the display part 215.

On the other hand, when the number of acquisition times is less than the number of readable times, the output controller 214 further compares the position information received from the position information output 217, with the readable place included in the data D (step S37). When the position indicated by the position information is a predetermined distance or more apart from the position indicated by the readable position, the output controller 214 rejects output of the acquired personal information and displays an error message on the display part 215.

On the other hand, when the position indicated by the position information is less than the predetermined distance from the position indicated by the readable position, the output controller 214 permits output of the acquired personal information. Then the personal information is displayed on the display part 205 (step S38).

In the personal information access system 2 described above, the bar-code information output 116 of the information processing device 11 bar-codes personal information in association with the use start date, number of usable times, and usable place of the personal information and the bar-code information is printed on the paper medium M. The access terminal 21 acquiring the two-dimensional bar-code information 30 controls the output of the personal information on the basis of the comparison between the use start date and the current time information, the comparison between the number of past acquisition times of the pertinent personal information and the number of usable times, and the comparison between the current position and the usable position, and only the personal information permitted to output is displayed on the display part 215. In the personal information access system 2, as just described, the security level of personal information is synergistically enhanced by the encryption and by the bar-coding of the personal information with the condition information being set. Namely, when the user carries a print of the bar-coded personal information, the user is allowed to read the bar-code only in a specific time zone, within a specific maximum number, and within an area near a customer address or a work area, whereby a risk of information leakage is further reduced.

The following will describe an information processing program 57 for letting a computer function as the aforementioned information processing device 11, and a personal information access program (private information access program) 67 for letting a terminal function as the aforementioned access terminal 21.

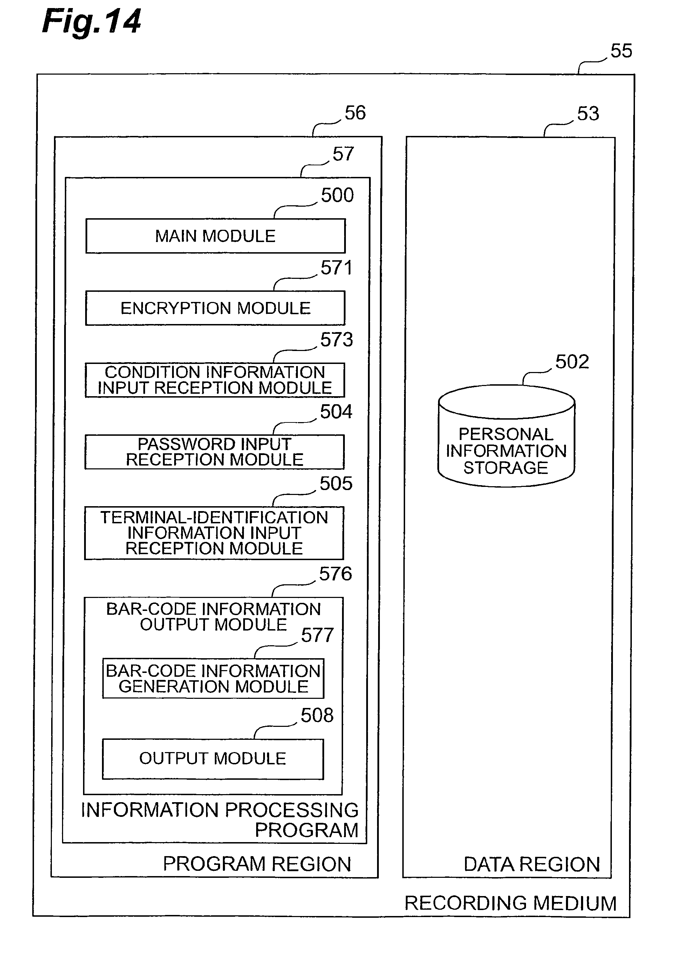

Fig. 14 is a drawing showing a configuration of a recording medium 55 storing the information processing program 57. The recording medium 55 is provided with a program region 56 storing a program, and a data region 53, as shown in Fig. 14. The information processing program 57 is recorded in this program region 56, and the information processing program 57 is provided with main module 500 for generally controlling processing, encryption module 571, condition information input reception module 573, password input reception module 504, terminal-identification information input reception module 505, and bar-code information output module 576. The bar-code information output module 576 is comprised of bar-code information generation module 577 and output module 508.

Functions implemented by respective operations of the encryption module 571, condition information input reception module 573, password input reception module 504, terminal-identification information input reception module 505, and bar-code information output module 576 are the same as the functions of the aforementioned encryption part 111, condition information input reception 113, password input reception 104, terminal-identification information input reception 105, and bar-code information output 116 of the information processing device 11, respectively.

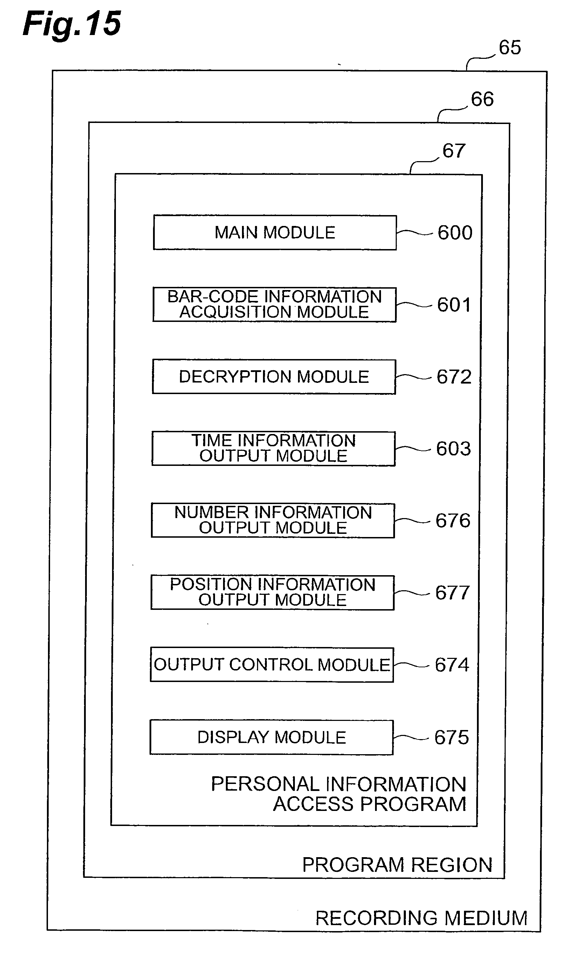

Fig. 15 is a drawing showing a configuration of a recording medium 65 storing the personal information access program 67. The recording medium 65 is provided with a program region 66 storing a program, as shown in Fig. 15. The personal information access program 67 is recorded in this program region 66, and this personal information access program 67 is provided with main module 600 for generally controlling processing, bar-code information acquisition module 601, decryption module 672, time information output module 603, number information output module 676, position information output module 677, output control module 674, and display module 675. Functions implemented by respective operations of the bar-code information acquisition module 601, decryption module 672, time information output module 603, number information output module 676, position information output module 677, output control module 674, and display module 675 are the same as the functions of the aforementioned bar-code information acquirer 201, decryption part 212, time information output 203, number information output 216, position information output 217, output controller 214, and display part 215 of the access terminal 21, respectively.

### Industrial Applicability

The present invention is applicable to the information processing devices, access terminals, private information access systems, private information access methods, information processing programs, and private information access programs for output of private information, and ensures prevention of leakage of private information to third parties.

## Claims

1. An information processing device for outputting encrypted information resulting from encryption of predetermined plaintext information, as bar-code information to a predetermined medium, the information processing device comprising:
encrypting means for encrypting the plaintext information to obtain the encrypted information; and
bar-code information outputting means for generating bar-code information containing the encrypted information and condition information which defines a condition for decryption of the encrypted information to acquire the plaintext information, and for outputting the bar-code information to the predetermined medium.

2. An information processing device for outputting private information to a predetermined medium, the information processing device comprising:
encrypting means for encrypting the private information; and
bar-code information outputting means for generating bar-code information in which the encrypted private information is associated with term information defining a valid period of the private information, and for outputting the bar-code information to the predetermined medium.

3. The information processing device according to claim 1, wherein the condition information includes information about a term.

4. The information processing device according to claim 1, wherein the condition information includes information about a number of decryption and output times of the plaintext information.

5. The information processing device according to claim 1, wherein the condition information includes information about a place.

6. An access terminal for acquiring bar-code information outputted to a predetermined medium and for outputting information contained in the bar-code information, the access terminal comprising:
bar-code information acquiring means for acquiring the bar-code information from the predetermined medium;
decrypting means for decrypting encrypted information contained in the bar-code information, to obtain plaintext information;
access terminal information acquiring means for acquiring access terminal information that can be specified in the access terminal, when the bar-code information acquiring means acquires the bar-code information; and
output controlling means for controlling output of the plaintext information, based on condition information contained in the bar-code information acquired by the bar-code information acquiring means, and the access terminal information acquired by the access terminal information acquiring means.

7. An access terminal for acquiring private information outputted to a predetermined medium, the access terminal comprising:
bar-code information acquiring means for acquiring bar-code information from the predetermined medium;
decrypting means for decrypting encrypted private information contained in the bar-code information;
time information outputting means for outputting current time information when the bar-code information acquiring means acquires the bar-code information; and
output controlling means for comparing term information contained in the bar-code information acquired by the bar-code information acquiring means, with the current time information outputted by the time information outputting means and for controlling output of the private information.

8. The access terminal according to claim 6, wherein the access terminal information acquiring means acquires as the access terminal information, information about a time when the bar-code information acquiring means acquires the bar-code information, and
wherein the output controlling means controls the output of the plaintext information, based on the condition information contained in the bar-code information, and the information about the time.

9. The access terminal according to claim 6, wherein the access terminal information acquiring means acquires as the access terminal information, number-of-acquisition-times information about a number of past acquisition times of the bar-code information by the bar-code information acquiring means, and
wherein the output controlling means controls the output of the plaintext information, based on the condition information contained in the bar-code information, and the number-of-acquisition-times information.

10. The access terminal according to claim 6, wherein the access terminal information acquiring means acquires as the access terminal information, acquisition position information about a position where the bar-code information acquiring means acquires the bar-code information, and
wherein the output controlling means controls the output of the plaintext information, based on the condition information contained in the bar-code information, and the acquisition position information.

11. A private information access system for outputting encrypted information resulting from encryption of predetermined plaintext information, as bar-code information to a predetermined medium and for letting an access terminal acquire the bar-code information outputted to the predetermined medium and output information contained in the bar-code information, the private information access system comprising:
encrypting means for encrypting the plaintext information to obtain the encrypted information; and
bar-code information outputting means for generating bar-code information containing the encrypted information and condition information defining a condition for decryption of the encrypted information to acquire the plaintext information, and for outputting the bar-code information to the predetermined medium;
wherein the access terminal comprises:
bar-code information acquiring means for acquiring the bar-code information from the predetermined medium;
decrypting means for decrypting the encrypted information contained in the bar-code information, to obtain the plaintext information;
access terminal information acquiring means for acquiring access terminal information that can be specified in the access terminal, when the bar-code information acquiring means acquires the bar-code information; and
output controlling means for controlling output of the plaintext information, based on the condition information contained in the bar-code information acquired by the bar-code information acquiring means, and the access terminal information acquired by the access terminal information acquiring means.

12. A private information access system comprising an access terminal for acquiring private information outputted to a predetermined medium, the private information access system comprising:
encrypting means for encrypting the private information; and
bar-code information outputting means for generating bar-code information in which the encrypted private information is associated with term information defining a valid period of the private information, and for outputting the bar-code information to the predetermined medium;
wherein the access terminal comprises:
bar-code information acquiring means for acquiring the bar-code information from the predetermined medium;
decrypting means for decrypting the encrypted private information contained in the bar-code information;
time information outputting means for outputting current time information when the bar-code information acquiring means acquires the bar-code information; and
output controlling means for comparing the term information contained in the bar-code information acquired by the bar-code information acquiring means, with the current time information outputted by the time information outputting means, and for controlling the output of the private information.

13. The private information access system according to claim 11, wherein the bar-code information outputting means further associates a password with the encrypted information, and
wherein the output controlling means further compares the password with a password entered by a user when the bar-code information acquiring means acquires the bar-code information, and controls the output of the plaintext information.

14. The private information access system according to claim 11, wherein the bar-code information outputting means further associates terminal-identification information unique to the access terminal, with the encrypted information, and
wherein the output controlling means further compares the terminal-identification information with terminal-identification information stored in the access terminal itself, and controls the output of the plaintext information.

15. A private information access method of outputting encrypted information resulting from encryption of predetermined plaintext information, as bar-code information to a predetermined medium, the private information access method comprising:
a step wherein encrypting means encrypts the plaintext information to obtain the encrypted information; and
a step wherein bar-code information outputting means generates bar-code information containing the encrypted information and condition information defining a condition for decryption of the encrypted information to acquire the plaintext information, and outputs the bar-code information to the predetermined medium.

16. A private information access method of acquiring bar-code information outputted to the predetermined medium and outputting information contained in the bar-code information, the private information access method comprising the following steps executed in an access terminal:
a step wherein bar-code information acquiring means acquires the bar-code information from the predetermined medium;
a step wherein decrypting means decrypts encrypted information contained in the bar-code information, to obtain plaintext information;
a step wherein access terminal information acquiring means acquires access terminal information that can be specified in the access terminal, when the bar-code information acquiring means acquires the bar-code information; and
a step wherein output controlling means controls output of the plaintext information, based on condition information contained in the bar-code information acquired by the bar-code information acquiring means, and the access terminal information acquired by the access terminal information acquiring means.

17. A private information access method of accessing private information outputted to a predetermined medium, through an access terminal, the private information access method comprising:
a step wherein encrypting means encrypts the private information; and
a step wherein bar-code information outputting means generates bar-code information in which the encrypted private information is associated with term information defining a valid period of the private information, and outputs the bar-code information to the predetermined medium;
the private information access method further comprising the following steps executed in the access terminal:
a step wherein bar-code information acquiring means acquires the bar-code information from the predetermined medium;
a step wherein decrypting means decrypts the encrypted private information contained in the bar-code information;
a step wherein time information outputting means outputs current time information when the bar-code information acquiring means acquires the bar-code information; and
a step wherein output controlling means compares the term information contained in the bar-code information acquired by the bar-code information acquiring means, with the current time information outputted by the time information outputting means, and controls output of the private information.

18. An information processing program for outputting encrypted information resulting from encryption of predetermined plaintext information, as bar-code information to a predetermined medium, the information processing program letting a computer function as:
encrypting means for encrypting the plaintext information to obtain the encrypted information; and
bar-code information outputting means for generating bar-code information containing the encrypted information and condition information defining a condition for decryption of the encrypted information to acquire the plaintext information, and for outputting the bar-code information to the predetermined medium.

19. An information processing program for outputting private information to a predetermined medium, the information processing program letting a computer function as:
encrypting means for encrypting the private information; and
bar-code information outputting means for generating bar-code information in which the encrypted private information is associated with term information defining a valid period of the private information, and for outputting the bar-code information to the predetermined medium.

20. A private information access program for letting an access terminal acquire bar-code information outputted to a predetermined medium, and output information contained in the bar-code information, the private information access program letting the access terminal function as:
bar-code information acquiring means for acquiring the bar-code information from the predetermined medium;
decrypting means for decrypting encrypted information contained in the bar-code information, to obtain plaintext information;
access terminal information acquiring means for acquiring access terminal information that can be specified in the access terminal, when the bar-code information acquiring means acquires the bar-code information; and
output controlling means for controlling output of the plaintext information, based on condition information contained in the bar-code information acquired by the bar-code information acquiring means, and the access terminal information acquired by the access terminal information acquiring means.

21. A private information access program for letting an access terminal acquire private information outputted to a predetermined medium, the private information access program letting the access terminal function as:
bar-code information acquiring means for acquiring bar-code information from the predetermined medium;
decrypting means for decrypting encrypted private information contained in the bar-code information;
time information outputting means for outputting current time information when the bar-code information acquiring means acquires the bar-code information; and
output controlling means for comparing the term information contained in the bar-code information acquired by the bar-code information acquiring means, with the current time information outputted by the time information outputting means, and for controlling output of the private information.
